# EUROPEAN PATENT SPECIFICATION

(11) **EP 1 489 342 B1**
(45) Date of publication and mention of the grant of the patent: **05.03.2008**
(21) Application number: 03380144.0
(22) Date of filing: 18.06.2003
(51) Int. Cl.: F16K 11/22, F16K 11/20

(54) **Three-way valve**
Dreiwegeventil
Soupape à trois voies

(43) Date of publication of application: 22.12.2004
(73) Proprietor: Valvulas Arco, S.L., 46134 Foyos (Valencia) (ES)
(72) Inventor: Ferrer Beltran, José, 46134 Foyos (Valencia) (ES)
(74) Representative: Molina Garcia, Julia

(56) References cited:
- EP-A- 0 312 505
- FR-A- 2 632 378
- US-A- 3 778 029
- US-A1- 2003 084 942
- US-B1- 6 216 737

## Description

### OBJECT

The object of the invention of this patent consists of a "three-way valve, with independent quarter-turn outlets."

A similar valve has been described in document EP 0 312 505.

### BACKGROUND

Three-way valves are widely known devices for the regulation of the flow of liquid fluids, which include in one same body or box two independent valves set in such a way that, with one single inlet and two outlets, of equal or different diameters, they enable the separate control of the outlet flows of both sections.

The relative positions of the valves may vary, depending in turn on that taken by the inlet channel with regard to the outlet channels, since it can take up an intermediate position between both, or a position in one of the lateral channels.

Whatever the case, three-way valves must be able to take up four alternative functional positions:
- Both outlets open simultaneously.
- One outlet open and the other closed.
- That same status but the other way around (closed - open).
- Both outlets closed simultaneously.

A preferred application of three-way valves is the connection of domestic appliances (washing machines, dishwashers) and raps simultaneously to the water mains at one single inlet.

### DESCRIPTION OF THE INVENTION

The present invention provides a three-way valve in accordance with independent claim 1. Preferred embodiments of the invention arc reflected in the dependent claims.

The purpose of the invention that is the object of this patent consists of the engineering and production of a three-way valve with which the functional performance typical of said valves and common to all is obtained, by means of a quarter-turn flow control system on both outlets of each of the two independent valves integrated in it. The three-way valve claimed has been expressly designed and developed in accord with this objective, since the valve-machining for quarter-turn control systems is simpler and cheaper than the spindle system.

Said three-way valve is of the type with the inlet port between the two outlet ports, which are aligned orthogonally to the longitudinal axis of the inlet port in a general T-shaped layout.

One of the two independent valves is aligned axially with the tubular inlet channel that constitutes the central longitudinal section of the "T" (central valve), while the axis of the other valve is perpendicular to the longitudinal axis of one of the two tubular outlet channels, which make up the transverse section of the "T" (lateral valve). Both are grouped together in one single technical unit (three-way valve).

The valve aligned with the inlet channel, the central valve, receives the fluid from below and is capable of distributing it as desired to one or both sides simultaneously. For this purpose, that valve's plug has a straight interior channel and an L-shaped channel, with perpendicular outlet directions, in such a way that the straight channel lets the fluid use both outlets simultaneously, whereas the L-shaped channel provides only one unidirectional flow towards the outlet channel in which the lateral valve is inserted.

The valve set orthogonally to one of the outlet channels, the lateral valve, receives the flow from the side, transversally, and is capable of regulating the flow in the outlet channel in which it intervenes, for which purpose its plug has a straight interior channel.

The structures of the two independent valves, the central and lateral valves, correspond substantially to the generally known structure typical of fluid regulation valves with ellipsoidal plugs. Therefore, between said particular structures, there is both formal and functional similarity, except with regard to the fluid-flow through their respective plugs, the distinctive features of which have been previously described.

However, they do have differences of size and form resulting from the fact that their assembly is necessarily different since, whereas in the central valve the plug stem is assembled by introducing the unit through the bottom of the main body of the three-way valve, the lateral valve can be assembled through the top of the body only, i.e. through the housing neck.

The functioning of the claimed three-way valve, in order to fulfil the four alternative functional options required of it, includes the following simultaneous positioning of its respective interior channels:
- Both outlets open.
   Central valve: L-shaped channel closed and straight channel open.
   Lateral valve: Straight channel open.
- Single outlet through the channel with the lateral valve.
   Central valve: L-shaped channel open and straight channel closed.
   Lateral valve: Straight channel open.
- Single outlet through the lateral channel with no valve.
   Central valve: L-shaped channel closed and straight channel open.
   Lateral valve: Straight channel closed.
- Both outlets closed.
   Central valve: L-shaped channel open and straight channel closed.
   Lateral valve: Straight channel closed.

In the above positional descriptions, the word "open" is applied to the channel through whose interior the fluid flows, whereas, reciprocally, the word "closed" is applied to the channel in a position where the fluid cannot flow through its interior.

### BRIEF DESCRIPTIONS OF THE DIAGRAMS

In order to complement the description of the invention and facilitate interpretation of the formal, structural and functional features of its object, diagrams are attached showing different features of a preferred embodiment of the "three-way valve, with independent quarter-turn outlets" that is the object of this patent. In said diagrams:
Figure 1 shows a perspective view of the longitudinal section of the claimed three-way valve with the position of the controls of its independent valves enabling the simultaneous outlet of the fluid through its two lateral channels; Figure 2, with a single outlet through the channel in which the lateral valve is inserted; Figure 3, with a single outlet through the lateral channel with no valve; and Figure 4 with both lateral channels closed.

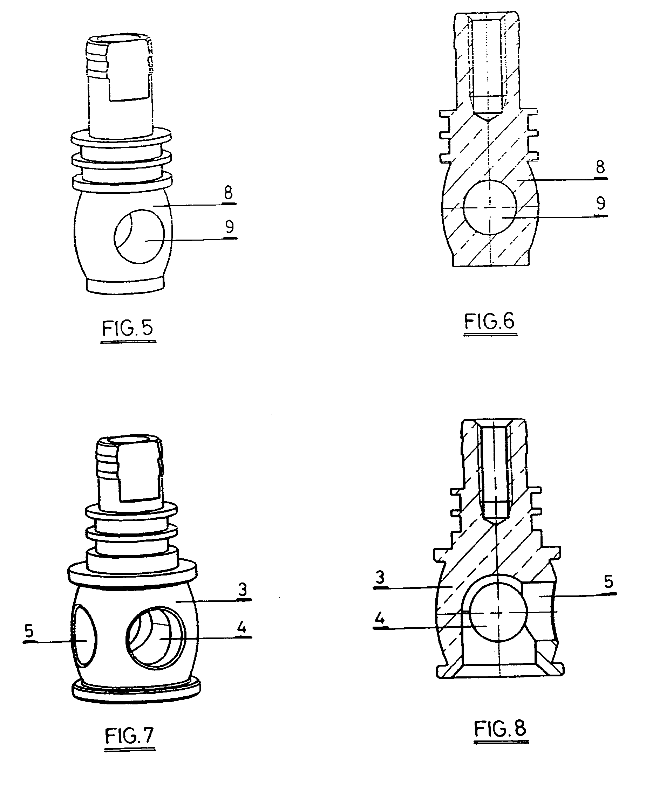

Figure 5 is a perspective view of the plug-stem unit of the lateral valve; and Figure 6 is a longitudinal and axial section of said unit.
Figure 7 is a perspective view of the plug-stem unit of the central valve; and Figure 8 is a longitudinal and axial section of said unit

### DESCRIPTION OF A PREFERRED EMBODIMENT

To clearly show the nature and scope of the advantageous application of the "three-way valve, with independent quarter-turn outlets" that constitutes the object of the claimed invention, the following is a description of its structure and functioning, with reference to the diagrams which, as they represent a preferred embodiment of said object, for information purposes, must be considered in their widest sense and not as limiting to the application and content of the claimed invention.

Said three-way valve is of the type with the inlet channel between the two outlet channels, which are aligned orthogonally to the longitudinal axis of the inlet valve in a general T-shaped layout.

One of the two independent valves is aligned axially with the tubular inlet channel that constitutes the central longitudinal section of the "T" (central valve), while the axis of the other valve is perpendicular to the longitudinal axis of one of the two tubular outlet channels, which make up the transverse section of the "T" (lateral valve). Both are grouped together in one single technical unit (three-way valve).

The valve aligned with the inlet channel (1), the central valve (2), receives the fluid from below and is capable of distributing it as desired to one or both sides simultaneously. For this purpose, its plug (3) has a straight interior channel (4) and an L-shaped channel (5), with perpendicular outlet directions, in such a way that the straight channel (4) lets the fluid use both outlets simultaneously, whereas the L-shaped channel (5) enables only one unidirectional flow towards the outlet channel (6) in which the lateral valve (7) is inserted.

The orthogonal valve to one of the outlet channels (6), the lateral valve (7), receives the flow from the side, transversally, and is capable of regulating the flow in the outlet channel (6) in which it intervenes, for the purpose of which its plug (8) has a straight interior channel (9).

The structures of the two independent valves, the central (2) and lateral (7) valves, correspond substantially to the general known structure typical of fluid regulation valves with ellipsoidal plugs. Therefore, between said particular structures, there is both formal and functional similarity, except with regard to the fluid flowing through their respective plugs, whose distinctive features have been previously described.

However, they do have differences of size and form resulting from the fact that their assembly is necessarily different since, whereas in the central valve (2) the plug stem is assembled by introducing the unit through the bottom of the main body of the three-way valve, the lateral valve (7) can be assembled through the top of the body only, i.e. through the housing neck.

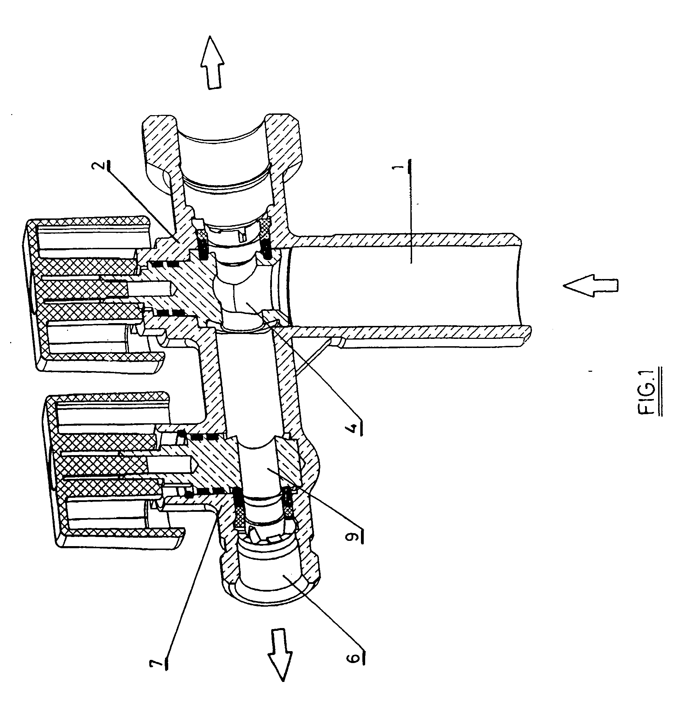

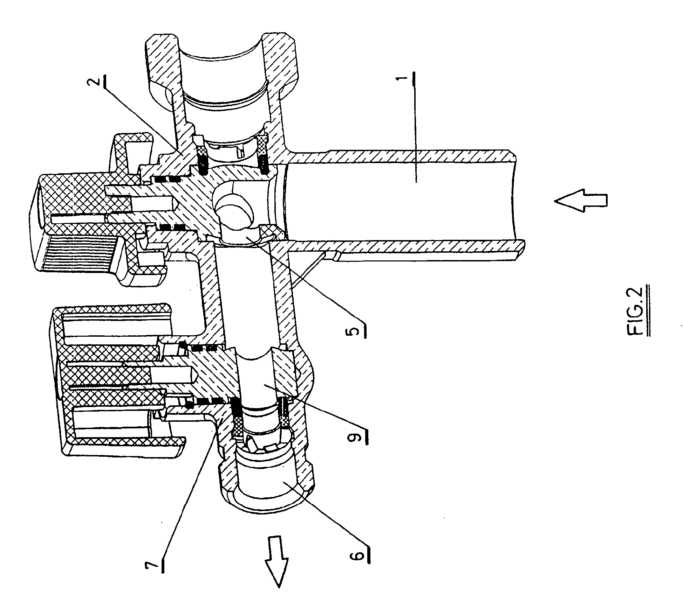

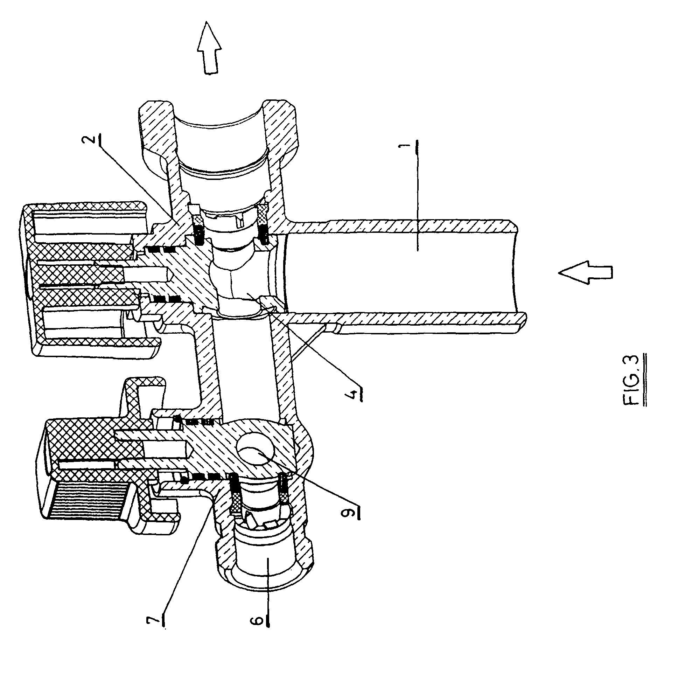

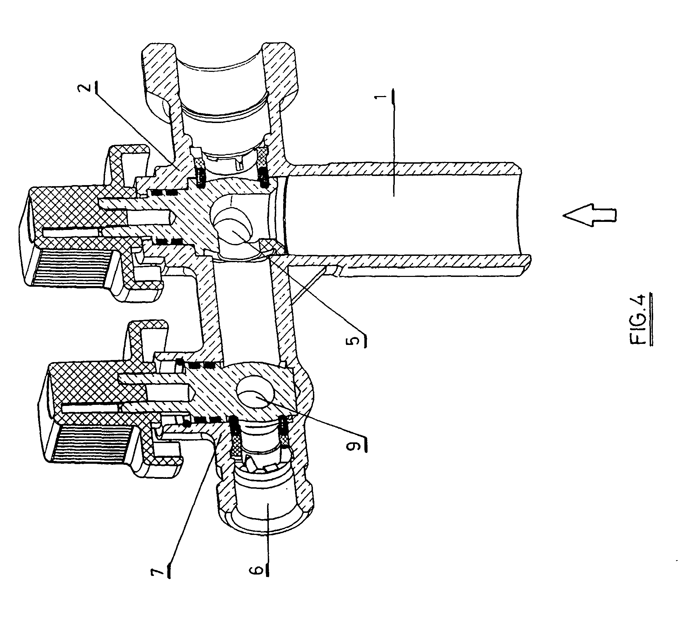

The functioning of the claimed three-way valve, in order to fulfil the four alternative functional options required of it, includes the following simultaneous positioning of its respective interior channels:
- Both outlets open. (See figure 1)
   Central valve: L-shaped channel closed and straight channel open.
   Lateral valve: Straight channel open.
- Single outlet through the channel (6) with the lateral valve (7): (See figure 2)
   Central valve: L-shaped channel open and straight channel closed.
   Lateral valve: Straight channel open.
- Single outlet through the lateral channel with no valve. (See figure 3)
   Central valve: L-shaped channel closed and straight channel open.
   Lateral valve: Straight channel closed.
- Both outlets closed. (See figure 4)
   Central valve: L-shaped channel open and straight channel closed.
   Lateral valve: Straight channel closed.

In the above positional descriptions, the word "open" is applied to the channel through whose interior the fluid flows, whereas, reciprocally, the word "closed" is applied to the channel in a position where the fluid cannot flow through its interior.

## Claims

1. A three-way valve, comprising:
an inlet channel (1);
a first outlet channel;
a second outlet channel (6);
a first independent, quarter-turn valve (2) situated at an intersection of said inlet channel (1) and said first outlet channel and comprising a plug (3) provided with channels (4, 5) for regulating fluid communication between said inlet channel (1) and said first and second outlet channels; and
a second independent, quarter-turn valve (7) situated intermediate said first independent valve (2) and said second outlet channel (6), wherein
a longitudinal axis of said first outlet channel is orthogonal to a longitudinal axis of said inlet channel and a longitudinal axis of said second outlet channel is orthogonal to said longitudinal axis of said inlet channel such that said longitudinal axis of said inlet channel, said longitudinal axis of said first outlet channel and said longitudinal axis of said second outlet channel are arranged in a generally T-shaped configuration,
said inlet channel (1), said first outlet channel and said second outlet channel (6) are unitarily formed,
said first independent, quarter-turn valve (2) is axially aligned with said inlet channel (1), and
an axis of said second independent, quarter-turn valve (7) is perpendicular to said longitudinal axis of said second outlet channel,
**characterized in that**
said plug (3) and said inlet channel (1) are configured and adapted such that said plug (3) can be assembled into said three-way valve only via said inlet channel (1).

2. The three-way valve of claim 1, wherein said first independent valve (2) is configured and adapted for
- a first mode of operation in which fluid communication is established solely between said inlet channel (1) and said second independent valve (7); and
- a second mode of operation in which fluid communication is established between all of said inlet channel (1), said first outlet channel and said second independent valve (7).

3. The three-way valve of claim 2, wherein said first independent valve (2) is configured and adapted such that a quarter turn of said plug (3) effects a switching from said first mode of operation to said second mode of operation or a switching from said second mode of operation to said first mode of operation.

4. The three-way valve of any of the preceding claims, wherein said plug (3) comprises:
a first channel that extends only partially into said plug (3) along an axis of rotation of said plug (3);
a second channel (4) that extends through said plug (3) perpendicular to and intersecting said first channel; and
a third channel (5) perpendicular to and intersecting both said second channel (4) and said first channel.

5. The three-way valve of claim 4, wherein an outer radial wall of a fluid channel of said plug (3) that interconnects said first channel and said third channel (5) is smoothly curved.

6. The three-way valve of any of the preceding claims, wherein said second independent valve (7) is configured and adapted for regulating fluid communication between said first independent valve (2) and said second outlet channel (6).

7. The three-way valve of any of the preceding claims, wherein said longitudinal axis of said first outlet channel is the axis of fluid flow through said first outlet channel.

8. The three-way valve of any of the preceding claims, wherein said longitudinal axis of said second outlet channel (6) is the axis of fluid flow through said second outlet channel (6).

9. The three-way valve of any of the preceding claims, wherein said longitudinal axis of said inlet channel (1) is the axis of fluid flow through said inlet channel (1).

10. The three-way valve of any of the preceding claims, wherein said longitudinal axis of said inlet channel, said longitudinal axis of said first outlet channel and said longitudinal axis of said second outlet channel are arranged in a common plane.

11. The three-way valve of any of the preceding claims, wherein said inlet channel (1) extends in a straight line from said first independent valve (2) for a distance greater than a distance between said first and second independent valves.

12. The three-way valve of any of the preceding claims, wherein said inlet channel (1) is configured and adapted for attachment to piping that is separate from an assembly that forms said three-way valve.

13. The three-way valve of any of the preceding claims, wherein said plug (3) is configured and adapted to receive a handle.

14. The three-way valve of any of the preceding claims, wherein said plug (3) is machined from a single piece of material.

15. The three-way valve of any of the preceding claims, wherein said plug (3) comprises:
an L-shaped passage for fluid communication solely between said inlet channel (1) and said second independent valve (7); and
a T-shaped passage for fluid communication between all of said inlet channel (1), said first outlet channel and said second independent valve (7), wherein
one leg of said L-shaped passage is orthogonal to a plane defined by said T-shaped passage and the other leg of said L-shaped passage is common to the stem of said T-shaped passage.

16. The three-way valve of any of the preceding claims, wherein said second independent valve (7) is configured and adapted such that a quarter turn of a plug of said second independent valve (7) effects a switching between a fullest opening of fluid communication between said first independent valve (2) and said second outlet channel (6) and an absolute obstruction of fluid communication between said first independent valve (2) and said second outlet channel (6).

## Patentansprüche

1. 3-Wege-Ventil, welches
einen Eingangskanal (1);
einen ersten Ausgangskanal;
einen zweiten Ausgangskanal (6);
ein erstes unabhängiges Ventil (2) mit einer Viertel-Umdrehung, in einer Schnittstelle des besagten Eingangskanals (1) und des besagten ersten Ausgangskanals gelegen, umfasst, und welches eine mit Kanälen (4, 5) zur Regulierung der Fliessverbindung zwischen dem besagten Eingangskanal (1) und den besagten ersten und zweiten Ausgangskanälen versehenen Abdichtung (3) umfasst,
und ein zweites unabhängiges Ventil (7) mit einer Viertel-Umdrehung, in einer Zwischenposition zwischen dem besagten ersten unabhängigen Ventil (2) und dem genannten zweiten Ausgangskanal (6) gelegen, in der
eine Längsachse des besagten ersten Ausgangskanals orthogonal zu einer Längsachse des besagten Eingangskanals ist, und eine Längsachse des besagten zweiten Ausgangskanals orthogonal zur besagten Längsachse des besagten Eingangskanals ist, so dass die besagte Längsachse des genannten Eingangskanals, die besagte Längsachse des genannten ersten Ausgangskanals und die besagte Längsachse des genannten zweiten Ausgangskanals entsprechend einer generellen Ausgestaltung in T-Form angeordnet sind,
der besagte Eingangskanal (1), der besagte erste Ausgangskanal und der besagte zweite Ausgangskanal (6) einheitlich aufgebaut worden sind,
das besagte erste unabhängige Ventil (2) mit einer Viertel-Umdrehung, axial mit dem genannten Eingangskanal (1) aufgestellt ist, und
eine Achse des besagten zweiten unabhängigen Ventils (7) mit einer Viertel-Umdrehung, senkrecht zur besagten Längsachse des genannten zweiten Ausgangskanals ist,
**dadurch gekennzeichnet, dass**:
die genannte Abdichtung (3) und der besagte Eingangskanal (1) derart ausgestaltet und angepasst sind, dass die besagte Abdichtung (3) im genannten 3-Wege-Ventil nur durch den besagten Eingangskanal (1) eingesetzt werden kann.

2. 3-Wege-Ventil nach Anspruch 1, bei dem das besagte erste unabhängige Ventil (2) ausgestaltet und angepasst ist, damit:
- ein erster Betriebsmodus, in dem eine Fliessverbindung lediglich zwischen dem genannten Eingangskanal (1) und dem genannten zweiten unabhängigen Ventil (7) aufgebaut wird, und
- ein zweiter Betriebsmodus, in dem eine Fliessverbindung zwischen allen genannten Eingangskanal (1), erstem Ausgangskanal und zweitem unabhängigen Ventil (7) aufgebaut wird.

3. 3-Wege-Ventil nach Anspruch 2, bei dem das besagte erste unabhängige Ventil (2) derart ausgestaltet und angepasst ist, dass sich mit einer Viertel-Umdrehung der besagten Abdichtung (3) eine Umwandlung vom genannten ersten Betriebsmodus zum genannten zweiten Betriebsmodus, oder eine Umwandlung vom genannten zweiten Betriebsmodus zum genannten ersten Betriebsmodus verwirklicht wird.

4. 3-Wege-Ventil nach einem beliebigen der vorangehenden Ansprüche, bei dem die besagte Abdichtung (3)
einen ersten Kanal, der sich nur teilweise bis zur besagten Abdichtung (3) entlang einer Drehachse der besagten Abdichtung (3) erstreckt;
einen zweiten Kanal (4), der sich über die besagte Abdichtung (3) erstreckt, senkrecht zu, und schneidend mit dem genannten ersten Kanal, und
einen dritten Kanal (5) senkrecht zu, und schneidend mit beiden genannten zweiten Kanal (4) und ersten Kanal umfasst.

5. 3-Wege-Ventil nach Anspruch 4, bei dem eine äußere Radialwand eines Fliesskanals der besagten Abdichtung (3), die den genannten ersten Kanal mit dem besagten dritten Kanal (5) untereinander verbindet, leicht gekrümmt ist.

6. 3-Wege-Ventil nach einem beliebigen der vorangehenden Ansprüche, bei dem das besagte zweite unabhängige Ventil (7) ausgestaltet und angepasst ist, um die Fliessverbindung zwischen dem besagten ersten unabhängigen Ventil (2) und dem besagten zweiten Ausgangskanal (6) zu regulieren.

7. 3-Wege-Ventil nach einem beliebigen der vorangehenden Ansprüche, bei dem die besagte Längsachse des besagten ersten Ausgangskanals die Achse des Fluidstroms durch den besagten ersten Ausgangskanal ist.

8. 3-Wege-Ventil nach einem beliebigen der vorangehenden Ansprüche, bei dem die besagte Längsachse des besagten zweiten Ausgangskanals (6) die Achse des Fluidstroms durch den besagten zweiten Ausgangskanal (6) ist.

9. 3-Wege-Ventil nach einem beliebigen der vorangehenden Ansprüche, bei dem die besagte Längsachse des besagten Eingangskanals (1) die Achse des Fluidstroms durch den besagten Eingangskanal (1) ist.

10. 3-Wege-Ventil nach einem beliebigen der vorangehenden Ansprüche, bei dem die besagte Längsachse des besagten Eingangskanals, die besagte Längsachse des besagten ersten Ausgangskanals und die besagte Längsachse des besagten zweiten Ausgangskanals in einer gemeinsamen Ebene gelegen sind.

11. 3-Wege-Ventil nach einem beliebigen der vorangehenden Ansprüche, bei dem der besagte Eingangskanal (1) sich entsprechend einer geraden Linie vom genannten ersten unabhängigen Ventil (2) aus über einen Abstand erstreckt, der größer ist als der Abstand zwischen den besagten ersten und zweiten unabhängigen Ventilen.

12. 3-Wege-Ventil nach einem beliebigen der vorangehenden Ansprüche, bei dem der besagte Eingangskanal (1) für seine Halterung an einer Leitung, die von dem Satz, welcher das genannte 3-Wege-Ventil bildet, getrennt ist, ausgestaltet und angepasst ist.

13. 3-Wege-Ventil nach einem beliebigen der vorangehenden Ansprüche, bei dem die besagte Abdichtung (3) zur Aufnahme eines Griffes ausgestaltet und angepasst ist.

14. 3-Wege-Ventil nach einem beliebigen der vorangehenden Ansprüche, bei dem die besagte Abdichtung (3) aus einem einzigen Materialstück bearbeitet wurde.

15. 3-Wege-Ventil nach einem beliebigen der vorangehenden Ansprüche, bei dem die besagte Abdichtung (3)
einen L-förmigen Durchgang für die Fliessverbindung lediglich zwischen dem besagten Eingangskanal (1) und dem besagten zweiten unabhängigen Ventil (7), und
einen T-förmigen Durchgang für die Fliessverbindung zwischen der Gesamtheit des besagten Eingangskanals (1), des besagten ersten Ausgangskanals und des besagten zweiten unabhängigen Ventils (7) umfasst, bei dem:
ein Bein des besagten L-förmigen Durchgangs orthogonal zu einer von dem besagten T-förmigen Durchgang definierten Ebene ist, und das andere Bein des besagten L-förmigen Durchgangs mit dem Schaft des T-förmigen Durchgangs gemeinsam ist.

16. 3-Wege-Ventil nach einem beliebigen der vorangehenden Ansprüche, bei dem das besagte zweite unabhängige Ventil (7) derart ausgestaltet und angepasst ist, dass mit einer Viertel-Umdrehung eines Stöpsels des besagten zweiten unabhängigen Ventils (7) sich eine Umwandlung zwischen der vollständigsten Öffnung der Fliessverbindung zwischen dem besagten ersten unabhängigen Ventil (2) und dem besagten zweiten Ausgangskanal (6), und einer unumschränkten Blockierung der Fliessverbindung zwischen dem genannten ersten unabhängigen Ventil (2) und dem besagten zweiten Ausgangskanal (6) verwirklicht wird.

## Revendications

1. Une soupape à trois voies, comprenant:
un canal (1) d'entrée
un premier canal de sortie;
un deuxième canal (6) de sortie;
une première soupape (2) à quart de tour, indépendante, située dans une intersection dudit canal (1) d'entrée et ledit premier canal de sortie, et comprenant un obturateur (3) pourvu de canaux (4, 5) pour réguler la communication de fluide entre ledit canal (1) d'entrée et ledit premier et ledit deuxième canaux de sortie, et
une deuxième soupape (7) à quart de tour, indépendante, située dans une position intermédiaire entre ladite première soupape (2) indépendante et ledit deuxième canal (6) de sortie, dans laquelle,
un axe longitudinal dudit premier canal de sortie est orthogonal à un axe longitudinal dudit canal d'entrée, et un axe longitudinal dudit deuxième canal de sortie est orthogonal audit axe longitudinal dudit canal de entrée, de telle manière que ledit axe longitudinal dudit canal d'entrée, ledit axe longitudinal dudit premier canal de sortie, et ledit axe longitudinal dudit deuxième canal de sortie, sont disposés selon une configuration générale sous forme de T,
ledit canal (1) d'entrée, ledit premier canal de sortie et ledit deuxième canal (6) de sortie, ont été formés de façon unitaire,
ladite première soupape (2) à quarte de tour, indépendante, est alignée axialement avec ledit canal (1) d'entrée, et
un axe de ladite deuxième soupape (7) à quart de tour, indépendante, est perpendiculaire audit axe longitudinal dudit deuxième canal de sortie,
qui se **caractérise en ce que**:
ledit obturateur (3) et ledit canal (1) d'entrée sont configurés et adaptés de telle manière que ledit obturateur (3) peut être assemblé dans ladite soupape à trois voies seulement à travers ledit canal (1) d'entrée.

2. La soupape à trois voies de la revendication 1, dans laquelle ladite première soupape (2) indépendante est configurée et adaptée pour:
- un premier mode de fonctionnement dans lequel est établie une communication de fluide uniquement entre ledit canal (1) d'entrée et ladite deuxième soupape (7) indépendante, et
- un deuxième modo de fonctionnement dans lequel est établie une communication de fluide entre tous lesdits canal (1) d'entrée, premier canal de sortie et deuxième soupape (7) indépendante.

3. La soupape à trois voies de la revendication 2, dans laquelle ladite première soupape (2) indépendante est configurée et adaptée de telle manière qu'avec un quart de tour dudit obturateur (3) on effectue une commutation depuis ledit premier mode de fonctionnement jusqu'audit deuxième mode de fonctionnement, ou un commutation depuis ledit deuxième mode de fonctionnement jusqu'audit premier mode de fonctionnement.

4. La soupape à trois voies de l'une quelconque des revendications antérieures, dans laquelle ledit obturateur (3) comprend:
un premier canal qu' s'étend seulement partiellement vers ledit obturateur (3) le long d'un axe de rotation dudit obturateur (3);
un deuxième canal (4) qui s'étend à travers ledit obturateur (3), perpendiculaire à, et coupant, ledit premier canal, et
un troisième canal (5) perpendiculaire à, et coupant, ledit deuxième canal (4) et ledit premier canal.

5. La soupape à trois voies de la revendication 4, dans laquelle une paroi radiale externe d'un canal de fluide dudit obturateur (3) qui interconnecte ledit premier canal par le biais dudit troisième canal (5), est légèrement courbée.

6. La soupape à trois voies de l'une quelconque des revendications antérieures, dans laquelle ladite deuxième soupape (7) indépendante est configurée et adaptée pour réguler la communication de fluide entre ladite première soupape (2) indépendante et ledit deuxième canal (6) de sortie.

7. La soupape à trois voies de l'une quelconque des revendications antérieures, dans laquelle ledit axe longitudinal dudit premier canal de sortie est l'axe d'écoulement du fluide à travers ledit premier canal de sortie.

8. La soupape à trois voies de l'une quelconque des revendications antérieures, dans laquelle ledit axe longitudinal dudit deuxième canal (6) de sortie est l'axe d'écoulement du fluide à travers ledit deuxième canal (6) de sortie.

9. La soupape à trois voies de l'une quelconque de revendications antérieures, dans laquelle ledit axe longitudinal dudit canal (1) d'entrée est l'axe d'écoulement du fluide à travers ledit canal (1) d'entrée.

10. La soupape à trois voies de l'un quelconque des revendications antérieures, dans laquelle ledit axe longitudinal dudit canal d'entrée, ledit axe longitudinal dudit premier canal de sortie et ledit axe longitudinal dudit deuxième canal de sortie, sont situés dans un plan commun.

11. La soupape à trois voies de l'une quelconque des revendications antérieures, dans laquelle ledit canal (1) d'entrée s'étende selon une ligne droite depuis ladite première soupape (2) indépendante, sur une distance supérieure à la distance entre lesdites première et deuxième soupapes indépendantes.

12. La soupape à trois voies de l'une quelconque des revendications antérieures, dans laquelle ledit canal (1) d'entrée est configuré et adapté pour sa fixation à une conduite étant séparée de l'ensemble qui forme ladite soupape à trois voies.

13. La soupape à trois voies de l'une quelconque des revendications antérieures, dans laquelle ledit obturateur (3) est configuré et adapté pour recevoir une poignée.

14. La soupape à trois voies de l'une quelconque des revendications antérieures, dans laquelle ledit obturateur (3) a été usiné à partir d'une seule pièce de matière.

15. La soupape à trois voies de l'une quelconque des revendications antérieures, dans laquelle ledit obturateur (3) comprend:
un passage sous forme de L, pour la communication de fluide uniquement entre ledit canal (1) d'entrée et ladite deuxième soupape (7) indépendante, et
un passage sous forme de T, pour la communication de fluide entre la totalité dudit canal (1) d'entrée, ledit premier canal de sortie et ladite deuxième soupape (7) indépendante, dans laquelle:
une patte dudit passage sous forme de L est orthogonal à un plan défini par ledit passage sous forme de T, et l'autre patte dudit passage sous forme de L est commune à la tige du passage sous forme de T.

16. La soupape à trois voies de l'une quelconque des revendications antérieures, dans laquelle ladite deuxième soupape (7) indépendante est configurée et adaptée de telle manière qu'avec un quart de tour d'un obturateur de ladite deuxième soupape (7) indépendante, on effectue une commutation entre l'ouverture la plus complète de la communication de fluide entre ladite première soupape (2) indépendante et ledit deuxième canal (6) de sortie, et une obstruction absolue de la communication de fluide entre ladite première soupape (2) indépendante et ledit deuxième canal (6) de sortie.
